# EUROPEAN PATENT SPECIFICATION

(11) **EP 1 919 230 B1**
(45) Date of publication and mention of the grant of the patent: **01.07.2015**
(21) Application number: 06301100.1
(22) Date of filing: 31.10.2006
(51) Int. Cl.: H04W 28/20, H04W 36/08, H04W 92/12

(54) **A method for capacity allocation for packet transfer of streaming traffic in a radio access network**
Verfahren zur Kapazitätzuweisung für Paketübertragung eines Stromverkehrs in einem Funkzugriffsnetzwerk
Procédé pour affectation de capacité pour le transfert de paquets d'émission de trafic en continu dans un réseau d'accès radio

(43) Date of publication of application: 07.05.2008
(73) Proprietor: ALCATEL LUCENT, 92100 Boulogne-Billancourt (FR)
(72) Inventor: Sehedic, Yann, 92170, VANVES (FR); Wong, Eliza, 78141, VELIZY (FR)
(74) Representative: El Manouni, Josiane

(56) References cited:
- EP-A- 1 422 887
- STEVE BARRETT: "Prioritised forwarding of HSDPA packets to the new Node B following handover of the HS-DSCH" IP.COM JOURNAL, IP.COM INC., WEST HENRIETTA, NY, US, 27 September 2004 (2004-09-27), XP013021620 ISSN: 1533-0001
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R3, no. V720, September 2006 (2006-09), XP014035617 ISSN: 0000-0001

## Description

The present invention generally relates to mobile communication systems.

The present invention in particular relates to third generation mobile communication systems, such as in particular UMTS (Universal Mobile Telecommunication System), and their evolutions.

In a general way, mobile communication systems are subject to standardisation; therefore, for more information on such systems, reference can be made to the corresponding standards, published by the corresponding standardisation bodies, such as in particular 3GPP (3^{rd} Generation Partnership Project).

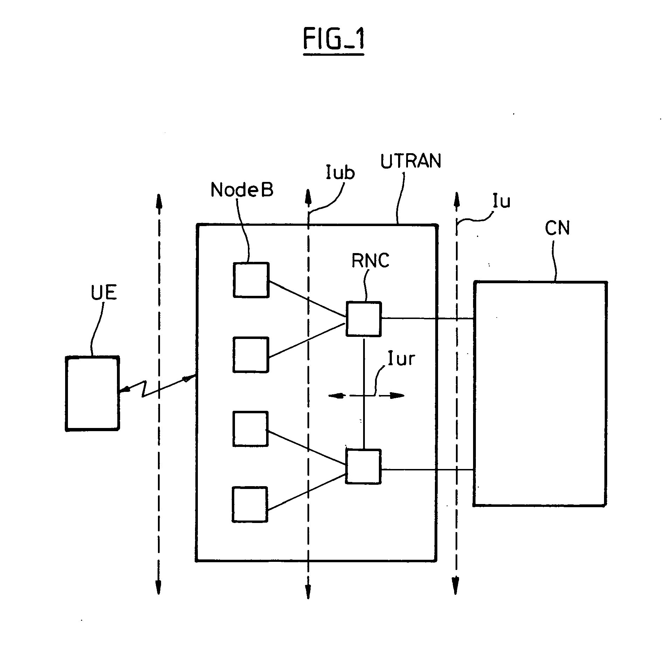

The general architecture of a system such as UMTS is recalled in figure 1.

The system comprises a mobile communication network communicating wih mobile stations or UEs (User Equipments) and with external networks (not specifically illustrated). The mobile communication network is composed of RAN (Radio Access Network), also called UTRAN (UMTS Terrestrial Radio Access Network), and CN (Core Network). UTRAN is composed of network elements such as Node B (base station), and RNC (Radio Network Controller). UTRAN communicates with UE via a radio interface called Uu-interface. UTRAN communicates with CN via a terrestrial interface called lu- interface. Within UTRAN, Node B communicates with RNC via a terrestrial interface called lub- interface, and RNCs may communicate via a terrestrial interface called lur-interface.

A description of the protocols on these interfaces can be found in the corresponding Technical Specifications published by 3GPP.

Radio interface protocols include, in particular, from higher to lower layers: RLC (Radio Link Control), MAC (Medium Access Control), Physical Layer. In the RLC layer, Radio Bearers are mapped to logical channels. In the MAC layer, logical channels are mapped to transport channels. In the physical layer, transport channels are mapped to physical channels.

MAC architecture comprises different MAC entities, including MAC entities handling dedicated transport channels (such as in particular MAC-d), and MAC entities handling common or shared transport channels.

The present invention more particularly relates to the evolutions of such systems towards broadband radio access. An example of such evolutions which will more particularly considered in the following is HSDPA (High Speed Downlink Packet Access) for UMTS. However, it should be understood that the present invention is not limited to such example.

HSDPA introduces a new transport channel, called HS-DSCH (High Speed Downlink Shared Channel), and a new MAC entity, called MAC-hs, handling the HS-DSCH. HSDPA specific functions performed by MAC-hs are described in particular in 3GPP TS 25.321 specifying MAC protocol.

The functions performed by MAC-hs in the Node B include, in particular, a flow control function.

MAC-hs flow control uses a HS-DSCH capacity allocation procedure, whereby the Node B allocates lub resources or capacity to the RNC for each MAC-d flow (or user data flow), taking into account various parameters including: amount of user data buffered in the Node B, MAC-hs output data rate, lub bandwidth, ...etc.

The HS-DSCH capacity allocation procedure is described in particular in 3GPP TS 25.435 specifying the lub-interface user plane protocols for common transport channel data streams.

According to the HS-DSCH capacity allocation procedure, a HS-DSCH Capacity Allocation control frame or message is sent by the Node B to the RNC, to control the user data flow. The total amount of capacity granted and its validity is indicated with the following lEs (Information Elements) of the HS-DSCH Capacity Allocation message: Maximum MAC-d PDU length, HS-DSCH Credits, HS-DSCH Interval, and HS-DSCH Repetition Period.

The HS-DSCH Credits IE indicates the number of MAC-d PDUs that a RNC may transmit during one HS-DSCH Interval granted in the HS-DSCH CAPACITY ALLOCATION Control Frame.

The HS-DSCH Interval indicates the time interval during which the HS-DSCH Credits granted in the HS-DSCH CAPACITY ALLOCATION Control Frame may be used. The first interval starts immediately after reception of the HS-DSCH CAPACITY ALLOCATION Control Frame, subsequent intervals start immediately after the previous interval has elapsed.

The HS-DSCH Repetition Period indicates the number of subsequent intervals that the HS-DSCH Credits IE granted in the HS-DSCH CAPACITY ALLOCATION Control Frame may be used.

An important issue for real-time/streaming services is that QoS (Quality of Service) should to be guaranteed; this is more difficult to meet when packet data transfer is used, and even more when such functionality as HSDPA is used.

The QoS architecture for a system such as UMTS is specified in particular in 3GPP TS 23.107. This QoS architecture relies on different bearer services, different traffic classes, and different QoS attributes. Different bearer services include: UMTS Bearer, RAB (Radio Access Bearer), RB (Radio Bearer) ...etc. Different traffic classes include: conversational, streaming, interactive, background. Different QoS attributes include: traffic class, maximum bitrate, guaranteed bitrate, transfer delay, traffic handling priority, ...etc. Conversational and streaming classes are mainly used for real-time traffic flows, for which the QoS requirements are the highest, in terms of Guaranteed Bit Rate (GBR) and transfer delay. A common requirement for these two classes is that the time relation between information entities of the stream should be preserved. However, contrary to the conversational class, the streaming class does not have any requirement on a low transfer delay. Guaranteed Bit Rate (GBR) may be used for resource allocation within UMTS.

When PS streaming RAB is mapped on HS-DSCH, GBR (Guaranteed Bit Rate) has to be provided to the UE. For PS streaming RAB mapped on HS-DSCH, when non elastic traffic is supported for example, the Node B shall not schedule a user data rate higher than the MAC-hs GBR. Therefore, flow control is generally done by sending a single HS-DSCH Capacity Allocation control frame with a "HS-DSCH Repetition Period" IE set to "0" to indicate an unlimited repetition period, and a "HS-DSCH Credits" IE corresponding to MAC-hs GBR or a value near MAC-hs GBR.

However, in case of mobility procedure such as inter Node B Serving HS-DSCH Cell Change or inter-frequency HHO (Hard Hand Over), the traffic is interrupted for some time to avoid loss of data. Indeed, if data is sent too late to the "old" Node B (i.e. just before the Serving HS-DSCH Cell Change), then this "old" Node B is not able to send the data before the Serving HS-DSCH Cell Change. So, the RNC should stop sending data to the "old" Node B "some time" before the actual Serving HS-DSCH Cell Change. For instance, the traffic may be interrupted for around 200ms in case of inter Node B Serving HS-DSCH Cell Change. This interruption is also observed for the case of intra Node B Serving HS-DSCH Cell Change: for instance, an interruption of 90ms may be observed in this case.

For PS (Packet Switched) Interactive / Background RAB mapped on HS-DSCH, such traffic interruptions are not critical as there is no bit rate to guarantee.

However, for PS streaming RAB mapped on HS-DSCH, such traffic interruptions result in providing a data rate to the UE slightly smaller than the GBR; in other words the QoS is not guaranteed in case of mobility, which may not be acceptable for the user.

The case of non elastic traffic mentioned above is only considered as an example to which the present invention applies. The present invention also applies to the case of elastic traffic, where more than the GBR may be provided at a given instant depending on available resources, but where, in case of lack of resources, traffic interruptions (due for example to mobility procedures) may also result in providing a data rate smaller than the GBR.

Handover of HS-DSCH is considered in STEVE BARRETT: "Proritised forwarding of HSDPA packets to the new Node B following handover of the HS-DSCH" IP.COM JOURNAL, IP.COM INC, WEST HENRIETTA, NY, US, 27 September 2004 (2004-09-27), XP013021620 ISSN: 1533-0001, where there is disclosed that MAC_d HSDPA PDU's for the handed-over connection should be forwarded by the RNC to the new Node B with priority over the sending of packets on the other MAC_d flows, i.e, with priority over those other MAC_d flows (connections) that have not just experienced handover.

It is an object of the present invention to solve part or all of such problems, or to avoid part or all of such drawbacks. More generally it is an object of the present invention to improve the Quality of Service in such systems.
These and other objects are achieved, in one aspect of the present invention, by a method for capacity allocation for packet transfer of streaming traffic in a radio access network, using a capacity allocation procedure whereby a base station allocates capacity to a radio network controller for packet transfer at the Interface between said radio network controller and said base station, said method comprising allocating more capacity before, and/or after, a traffic interruption, to maintain at least a guaranteed bit rale for said streaming traffic, despite said traffic interruption.

In another aspect, said radio access network may use High Speed Downlink Packet Access (HSDPA).

In another aspect, said traffic interruption may be due to a mobility procedure.

In another aspect, said mobility procedure may be in a group comprising: inter-Node B serving HS-DSCH cell change, intra-Node B serving HS-DSCH cell change, hard handover.

In another aspect, a base station may allocate capacity to a radio network controller, in the form of capacity credits, or number of packet data units allowed to be transferred, for a time interval.

These and other objects are achieved, in another aspect of the present invention, by a network entity for a mobile communication system, such as in particular base station (or Node B), and Radio Network Controller (RNC), for performing such a method.

Another aspect of the present invention is a base station comprising, for capacity allocation for packet transfer of streaming traffic in a radio access network, using a capacity allocation procedure whereby a base station allocates capacity to a radio network controller on the interface between said radio network controller and said base station :
- means for allocating more capacity before, and/or after, a traffic interruption, to maintain at least a guaranteed bit rate for said streaming traffic, despite said traffic interruption.

Another aspect of the present invention is a radio network controller comprising, for capacity allocation for packet transfer of streaming traffic in a radio access network, using a capacity allocation procedure whereby a base station allocates capacity to a radio network controller on the interface between said radio network controller and said base station :
- means for using more capacity before, and/or after, a traffic interruption, to maintain at least a guaranteed bit rate for said streaming traffic, despite said traffic interruption.

These and other aspects and/or objects of the present invention will become more apparent from the following description taken in conjunction with the accompanying drawings, wherein:
- figure 1 is intended to recall the general architecture of a mobile communication system, such as in particular UMTS,
- figure 2 is a diagram intended to illustrate the present invention, according to a first example,
- figure 3 is a diagram intended to illustrate the present invention, according to a second example.

The present invention may also be explained in the following way.

HS-DSCH credits are granted periodically to the RNC. This does not necessarily imply that an HS-DSCH Capacity Allocation control frame or message is sent to the RNC. Indeed, since the HS-DSCH credits to grant are quite stable, except in case of mobility, a single value can be granted for an infinite period. Still, in order to avoid the loss on DL supervision, a HS-DSCH Capacity Allocation Message needs to be sent from time to time, said message including a new HS-DSCH Capacity Allocation Period.

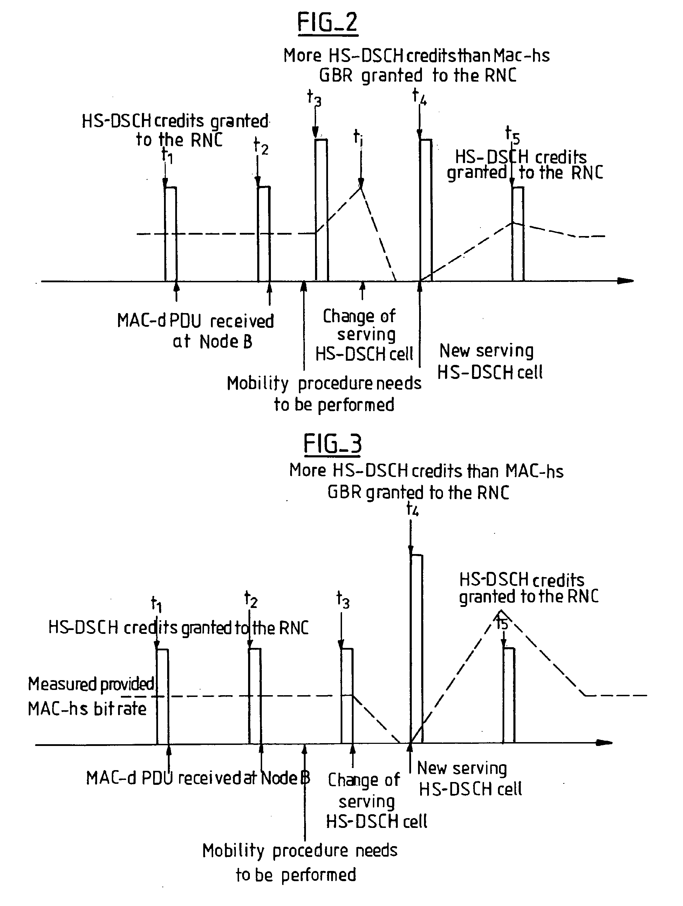

In the examples illustrated in figures 2 and 3, such HS-DSCH Capacity Allocation message sent except in case of mobility is sent at times such as t1, t2, t5. The HS-DSCH credits thus allocated except in case of mobility can be determined as usual, i.e. they can correspond to MAC-hs GBR or a value near MAC-hs GBR.

In the illustrated examples, in case of mobility, the following solutions are proposed.

In the example illustrated in figures 2, at a time such as t3, before a change of HS-DSCH serving cell, the Node B associated to the current HS-DSCH serving cell grants more HS-DSCH credits than usually granted for streaming traffic (i.e. as recalled above, MAC-hs GBR or a value near MAC-hs GBR).

In the example illustrated in figures 2, at a time such as t4, after a change of HS-DSCH serving cell, the Node B associated to the new HS-DSCH serving cell also grants more HS-DSCH credits than usually granted for streaming traffic.

Therefore, in the example illustrated in figure 2, more capacaity is allocated to the RNC before and after a traffic interruption due to a mobility procedure, such as at times t3 and t4 in the illustrated example.

Therefore, in the example illustrated in figure 2, the measured provided MAC-hs bit rate (as illustrated with dotted line in the figure):
- corresponds to MAC-hs GBR or a value near MAC-hs GBR, further to the allocation done at times such as t1 or t2,
- increases to a value higher than MAC-hs GBR, further to the allocation done at time such as t3,
- decreases to a value near 0 or strictly below MAC-hs GBR, further to traffic interruption at time ti between t3 and t4,
- increases to a value near MAC-hs GBR, further to the allocation done at time such as t4,
- corresponds to MAC-hs GBR or a value near MAC-hs GBR, further to the allocation done at time such as t5.

In the example illustrated in figure 3, more capacaity is allocated to the RNC after a traffic interruption due to a mobility procedure, such as at time t4 in the illustrated example.

Therefore, in the example illustrated in figure 3, the measured provided MAC-hs bit rate:
- corresponds to MAC-hs GBR or a value near MAC-hs GBR, further to the allocation done at times such as t1 or t2,
- decreases to a value near 0 or strictly below MAC-hs GBR, further to traffic interruption at time t3,
- increases to a value higher than MAC-hs GBR, further to the allocation done at time such as t4,
- decreases to MAC-hs GBR or a value near MAC-hs GBR, and is then kept at this value, further to the allocation done at time such as t5.

More capacity is thus allocated before and after a traffic interruption in the example of figure 2, or after a traffic interruption in the example of figure 3, to maintain the MAC-hs GBR, and therefore the GBR, despite the traffic interruption.

Therefore, with the present invention, the GBR can be provided to the UE, even in case of traffic interruption such as due to mobility (such as intra Node B or inter Node B Serving HS-DSCH Cell Change, or inter-frequency HHO).

On the contrary, in the prior art, where HS-DSCH capacity grants always correspond to MAC-hs GBR or a value near MAC-hs GBR, in the end, the GBR is not respected in case of traffic interruption such as due to mobility.

The present invention also has for its object network entites, such as in particular base station (or Node B), and Radio Network Controller (RNC), for performing a method according to the present invention

The present invention in particular has for its object a base station (or Node B), comprising, for capacity allocation for packet transfer of streaming traffic in a radio access network, using a capacity allocation procedure whereby a base station allocates capacity to a radio network controller for packet transfer at the interface between said radio network controller and said base station :
- means for allocating more capacity before, and/or after, a traffic interruption, to maintain at least a guaranteed bit rate for said streaming traffic, despite said traffic interruption.

The present invention in particular has for its object a radio network controller comprising, for capacity allocation for packet transfer of streaming traffic in a radio access network, using a capacity allocation procedure whereby a base station allocates capacity to a radio network controller for packet transfer at the interface between said radio network controller and said base station :
- means for using more capacity before, and/or after, a traffic interruption, to maintain at least a guaranteed bit rate for said streaming traffic, despite said traffic interruption.

The detailed implementation of the above-mentioned means does not raise any special problem for a person skilled in the art, and therefore such means do not need to be more fully disclosed than has been made above, by their function, for a person skilled in the art.

## Claims

1. A method for capacity allocation for packet transfer of streaming traffic in a radio access network (UTRAN), using a capacity allocation procedure whereby a Node B (Node B) allocates capacity to a radio network controller (RNC) for packet transfer at the interface between said radio network controller and said Node B, said method being **characterized in that** it comprises:
- before a change of HS-DSCH serving cell, a Node B associated to a current HS-DSCH serving cell granting more HS-DSCH credits than usually granted for streaming traffic,
- after a change of HS-DSCH serving cell, a Node B associated to a new HS-DSCH serving cell granting more HS-DSCH credits than usually granted for streaming traffic.

2. A method according to claim 1 or 2, wherein said radio access network uses High Speed Downlink Packet Access (HSDPA).

3. A method according to claim 1 or 2, wherein said mobility procedure is in a group comprising: inter-Node B serving HS-DSCH cell change, intra-Node B serving HS-DSCH cell change, hard handover.

4. A method according to any of claims 1 to 3, wherein a Node B allocates capacity to a radio network controller, in the form of capacity credits, or number of packet data units allowed to be transferred, for a time interval.

5. A Node B comprising means for capacity allocation for packet transfer of streaming traffic in a radio access network (UTRAN), using a capacity allocation procedure whereby a Node B (Node B) allocates capacity to a radio network controller (RNC) on the interface between said radio network controller and said Node B, said Node B being **characterized in that** it comprises :
- means for, before a change of HS-DSCH serving cell, in a Node B associated to a current HS-DSCH serving cell, granting more HS-DSCH credits than usually granted for streaming traffic,
- means for, after a change of HS-DSCH serving cell, in a Node B associated to a new HS-DSCH serving cell, granting more HS-DSCH credits than usually granted for streaming traffic.

6. A radio network controller comprising means for using capacity allocated for packet transfer of streaming traffic in a radio access network (UTRAN), using a capacity allocation procedure whereby a Node B allocates capacity to a radio network controller on the interface between said radio network controller and said Node B, said radio network controller being **characterized in that** it comprises:
- means for, before a change of HS-DSCH serving cell, using more HS-DSCH credits than usually granted for streaming traffic, allocated by a Node B associated to a current HS-DSCH serving cell,
- means for, after a change of HS-DSCH serving cell, using more HS-DSCH credits than usually granted for streaming traffic, allocated by a Node B associated to a new HS-DSCH serving cell.

## Patentansprüche

1. Verfahren für die Kapazitätszuteilung in der Paketübermittlung von Streaming-Traffic in einem Funkzugangsnetzwerk (UTRAN) unter Verwendung eines Kapazitätszuweisungsverfahrens, wobei ein Knoten B (Node B) einer Funknetzwerk-Steuereinrichtung (Radio Network Controller, RNC) für die Paketübermittlung an der Schnittstelle zwischen besagter Funknetzwerk-Steuereinrichtung und besagtem Node B Kapazität zuweist, wobei besagtes Verfahren **dadurch gekennzeichnet ist, dass** es umfasst:
- vor einem Wechsel einer HS-DSCH bedienenden Zelle einen Node B, der einer momentan einen HS-DSCH bedienenden Zelle zugeordnet ist und mehr HS-DSCH-Guthaben gewährt, als normalerweise für Streaming-Traffic gewährt wird.
- nach einem Wechsel einer HS-DSCH bedienenden Zelle, einen Node B, der einer neuen einen HS DSCH bedienenden Zelle zugeordnet ist und mehr HS-DSCH-Guthaben gewährt, als normalerweise für Streaming-Traffic gewährt wird.

2. Verfahren nach Anspruch 1 oder 2, wobei besagtes Funkzugangsnetzwerk High Speed Downlink Packet Access (HSDPA) verwendet.

3. Verfahren nach Anspruch 1 oder 2, wobei besagtes Mobilitätsverfahren zu einer Gruppe gehört, die umfasst: HS-DSCH-Zellwechsel bedienender Inter-Node B, HS-DSCH-Zellwechsel bedienender Intra-Node B, Hard Handover.

4. Verfahren nach einem beliebigen der Ansprüche 1 bis 3, wobei ein Node B einer Funknetzwerk-Steuereinrichtung für ein Zeitintervall Kapazität in Form von Kapazitäts-Guthaben oder einer Anzahl für die Übertragung zugelassener Paketdaten zuweist

5. Node B, umfassend Mittel für die Kapazitätszuteilung in der Paketübermittlung von Streaming-Traffic in einem Funkzugangsnetzwerk (UTRAN) unter Verwendung eines Kapazitätszuweisungsverfahrens, wobei ein Knoten B (Node B) einer Funknetzwerk-Steuereinrichtung (RNC) für die Paketübermittlung an der Schnittstelle zwischen besagter Funknetzwerk-Steuereinrichtung und besagtem Node B Kapazität zuweist, wobei besagtes Verfahren **dadurch gekennzeichnet ist, dass** es umfasst:
- Mittel, um vor einem Wechsel einer HS-DSCH bedienenden Zelle in einem Node B, der einer momentan einen HS-DSCH bedienenden Zelle zugeordnet ist, mehr HS-DSCH-Guthaben zu gewähren, als normalerweise für Streaming-Traffic gewährt wird,
- Mittel, um nach einem Wechsel einer HS-DSCH bedienenden Zelle in einem Node B, der einer neuen einen HS-DSCH bedienenden Zelle zugeordnet ist, mehr HS-DSCH-Guthaben zu gewähren als normalerweise für Streaming-Traffic gewährt wird.

6. Funknetzwerk-Steuereinrichtung, umfassend Mittel für den Gebrauch mit Kapazitätszuteilung in der Paketübermittlung von Streaming-Traffic in einem Funkzugangsnetzwerk (UTRAN) unter Verwendung eines Kapazitätszuweisungsverfahrens, wobei ein Node B einer Funknetzwerk-Steuereinrichtung für die Paketübermittlung an der Schnittstelle zwischen besagter Funknetzwerk-Steuereinrichtung und besagtem Node B Kapazität zuweist, wobei besagte Funknetzwerk-Steuereinrichtung **dadurch gekennzeichnet ist, dass** sie umfasst:
- Mittel, um vor einem Wechsel einer HS-DSCH bedienenden Zelle mehr HS-DSCH-Guthaben zu verwenden, als normalerweise für Streaming-Traffic gewährt wird, zugewiesen von einem Node B, der einer momentan einen HS-DSCH bedienenden Zelle zugeordnet ist,
- Mittel, um nach einem Wechsel einer HS-DSCH bedienenden Zelle mehr HS-DSCH-Guthaben zu verwenden als normalerweise für Streaming-Traffic gewährt wird, zugewiesen von einem Node B, der einer neuen einen HS-DSCH bedienenden Zelle zugeordnet ist.

## Revendications

1. Procédé d'attribution de capacité pour le transfert par paquets d'un trafic de diffusion continue dans un réseau d'accès radioélectrique (UTRAN), en utilisant une procédure d'attribution de capacité grâce à laquelle un Noeud B (Noeud B) attribue une capacité à un contrôleur de réseau de radiocommunication (RNC) pour le transfert par paquets au niveau de l'interface entre ledit contrôleur de réseau de radiocommunication et ledit Noeud B, ledit procédé étant **caractérisé en ce qu'**il comprend :
- avant un changement de cellule de desserte HS-DSCH, un Noeud B associé à une cellule de desserte HS-DSCH actuelle accordant plus de crédits HS-DSCH que le nombre de crédits habituellement accordés pour le trafic de diffusion continue,
- après un changement de cellule de desserte HS-DSCH, un Noeud B associé à une nouvelle cellule de desserte HS-DSCH accordant plus de crédits HS-DSCH que le nombre de crédits habituellement accordés pour le trafic de diffusion continue,

2. Procédé selon la revendication 1 ou 2, dans lequel ledit réseau d'accès radioélectrique utilise un accès par paquets en liaison descendante haut débit (HSDPA).

3. Procédé selon la revendication 1 ou 2, dans lequel ladite procédure de mobilité est dans un groupe comprenant un changement de cellule de desserte HS-DSCH inter-Noeuds B, un changement de cellule de desserte HS-DSCH intra-Noeuds B et un transfert intercellulaire avec coupure.

4. Procédé selon l'une quelconque des revendications 1 à 3, dans lequel un Noeud B attribue une capacité à un contrôleur de réseau de radiocommunication, sous la forme de crédits de capacité, ou d'un certain nombre d'unités de données par paquets autorisées à être transférées, pendant un intervalle de temps.

5. Noeud B comprenant des moyens d'attribution de capacité pour le transfert par paquets d'un trafic de diffusion continue dans un réseau d'accès radioélectrique (UTRAN), en utilisant une procédure d'attribution de capacité grâce à laquelle un Noeud B (Noeud B) attribue une capacité à un contrôleur de réseau de radiocommunication (RNC) sur l'interface entre ledit contrôleur de réseau de radiocommunication et ledit Noeud B, ledit Noeud B étant **caractérisé en ce qu'**il comprend :
- des moyens pour, avant un changement de cellule de desserte HS-DSCH, dans un Noeud B associé à une cellule de desserte HS-DSCH actuelle, accorder plus de crédits HS-DSCH que le nombre de crédits habituellement accordés pour le trafic de diffusion continue,
- des moyens pour, après un changement de cellule de desserte HS-DSCH, dans un Noeud B associé à une nouvelle cellule de desserte HS-DSCH, accorder plus de crédits HS-DSCH que le nombre de crédits habituellement accordés pour le trafic de diffusion continue.

6. Contrôleur de réseau de radiocommunication comprenant des moyens pour utiliser la capacité attribuée pour le transfert par paquets d'un trafic de diffusion continue dans un réseau d'accès radioélectrique (UTRAN), en utilisant une procédure d'attribution de capacité grâce à laquelle un Noeud B attribue une capacité à un contrôleur de réseau de radiocommunication sur l'interface entre ledit contrôleur de réseau de radiocommunication et ledit Noeud B, ledit contrôleur de réseau de radiocommunication étant **caractérisé en ce qu'**il comprend :
- des moyens pour, avant un changement de cellule de desserte HS-DSCH, utiliser plus de crédits HS-DSCH que le nombre de crédits habituellement accordés pour le trafic de diffusion continue, attribués par un Noeud B associé à une cellule de desserte HS-DSCH actuelle,
- des moyens pour, après un changement de cellule de desserte HS-DSCH, utiliser plus de crédits HS-DSCH que le nombre de crédits habituellement accordés pour le trafic de diffusion continue, attribués par un Noeud B associé à une nouvelle cellule de desserte HS-DSCH.
